# DEMANDE DE BREVET EUROPEEN

(11) **EP 0 727 856 A1**
(43) Date de publication de la demande: **21.08.1996**
(21) Numéro de dépôt: 96400291.9
(22) Date de dépôt: 13.02.1996
(51) Int. Cl.: H02G 15/068

(54) **Ruban semi-conducteur, pour câbles moyenne et haute tension et câble resultant**

(30) Priorité: 17.02.1995 FR 9501864
(71) Demandeur: ALCATEL CABLE, F-92100 Clichy (FR)
(72) Inventeur: Cardinaels, Jozef, 9230 WETTEREN (BE)
(74) Mandataire: Buffiere, Michelle

(57) **Abrégé**

Le ruban semi-conducteur comporte un film plastique (1), élastiquement déformable et mécaniquement résistant, et un revêtement adhésif (2) sur l'une des faces dudit film.

Il est caractérisé en ce qu'il comporte une pellicule de peinture semi-conductrice (3), souple, adhérente au film et déformable avec lui, sur l'autre des faces dudit film.

Application : câble moyenne ou haute tension, équipé d'un accessoire de raccordement et préalablement muni dudit ruban.

## Description

La présente invention concerne les câbles électriques moyenne et haute tension. Elle porte plus particulièrement sur un ruban semi-conducteur, pour de tels câbles, et sur un câble résultant, muni d'un tel ruban et équipé d'un accessoire de raccordement, en vue de solutionner le problème des décharges partielles dans l'accessoire de raccordement monté sur le câble.

De manière connue, le montage d'un accessoire de raccordement nécessite de préparer préalablement la partie terminale du câble le recevant. Cette - opération de préparation consiste à dénuder sur des longueurs différentes le conducteur central, l'isolation, la couche semi-conductrice et éventuellement l'écran métallique du câble.

Selon le type de couche semi-conductrice entourant l'isolation du câble, cette couche semiconductrice est coupée ou rasée à l'aide d'un outil tranchant ou est tout simplement pelée, pour la mise à nu de l'isolation sous-jacente.

Lorsque la couche semi-conductrice est enlevée à l'aide d'un outil tranchant, on peut en général amincir sa partie d'extrémité pour obtenir une transition progressive en cône sur l'isolation dénudée. Une telle transition douce en cône est souvent suffisante pour éviter des décharges dans l'accessoire en place. Elle doit cependant être aussi régulière que possible et nécessite donc d'être réalisée avec soin.

Lorsque la couche semi-conductrice est pelable, une telle transition douce n'est pas réalisable. On obtient une transition en marche d'escalier sur l'isolation dénudée, qui est définie par l'épaisseur de la couche semi-conductrice, de valeur courante de l'ordre de 1 mm, et dont le bord est plus ou moins irrégulier. Une telle marche crée ou peut laisser un espace intérieur entre le câble et l'accessoire en place et alors donner lieu à des décharges partielles dans l'accessoire, pour des valeurs de tension inférieures aux valeurs admissibles exigées.

Le document FR-A-2 503 476 décrit une solution pour éviter ces problèmes de décharges partielles dans un accessoire d'extrémité de câble. Cette solution consiste à appliquer un élément semi-conducteur, de préférence sous forme de pâte dense, sur au moins une partie de la couche semi-conductrice dénudée et une certaine longueur de l'isolation dénudée, avant la mise en place de l'accessoire sur celles-ci. Une telle couche de pâte semi-conductrice est appliquée avec une certaine épaisseur et récrée en conséquence une nouvelle transition relativement importante sur l'isolation du câble. Elle est souvent plus ou moins déplacée et refoulée avec la mise en place de l'accessoire, en particulier lorsque celui-ci est glissé en place. C'est la raison pour laquelle elle est d'épaisseur prévue relativement importante pour conserver sa continuité sous l'accessoire en place.

D'autres solutions sont également connues et adoptées en pratique. Ce sont en particulier l'utilisation d'un accessoire épaulé intérieurement pour s'adapter à la transition, ou d'une couche de peinture semi-conductrice ou d'une bande en matériau semi-conducteur appliquée sur la transition et de part et d'autre d'elle.

L'accessoire épaulé intérieurement doit reproduire la transition pour s'y adapter. Il doit être positionné avec précision pour bien la recouvrir et ne laisser aucun intervalle entre elle et l'accessoire. Il ne permet pas de compenser les éventuelles irrégularités terminales ou non de la transition.

La peinture semi-conductrice a l'avantage de pouvoir être appliquée en couche fine. Par contre, son application doit être effectuée par l'installateur de l'accessoire et exige une durée de séchage avant la mise en place de l'accessoire. En outre, son conditionnement en pot fait que la faible quantité réellement utilisée revient à un prix important, car en pratique les pots entamés ne sont en général pas réutilisés ou deviennent inutilisables au bout d'un certain temps après leur ouverture.

L'utilisation d'une bande réalisée en matériau semi-conducteur pose des problèmes similaires à ceux indiqués pour la pâte semi-conductrice. Son épaisseur est en général trop importante et son maintien en place pendant la pose de l'accessoire est difficile.

Le document FR-A-1506146 divulgue un revêtement pelliculaire pour câbles haute ou moyenne tension, qui se présente sous la forme d'une bande mince et flexible. Ce revêtement est constitué essentiellement par une composition isolante en matière plastique organique, qui contient de petites paillettes conductrices, minces, uniformément réparties, se chevauchant et orientées dans le plan du revêtement. Il a une constante diélectrique d'au moins 10 dans son plan. Il est enroulé en place, à recouvrement de ses enroulements, en l'étirant pour réduire son épaisseur et pour suivre les irrégularités des surfaces le recevant. L'une de ses faces peut être adhésive pour son maintien serré en place.

Un tel revêtement pelliculaire est de montage rapide et aisé sur un câble, mais est de réalisation relativement complexe et délicate et de coût résultant important. Sa constante diélectrique est rendue élevée dans son plan, par les pailettes conductrices noyées dans la matière plastique organique. Elle permet ainsi de diminuer le champ électrique dans les inclusions au niveau des irrégularités des surfaces recouvertes par le revêtement mais ne peut cependant rendre le champ électrique totalement nul au niveau des inclusions. En outre, l'allongement possible du revêtement lors de son étirage de mise en place est en tant que tel réduit par la présence des pailettes noyées intérieurement. De plus un allongement important peut conduire à ce que les pailettes intérieures ne se chevauchent plus dans des zones d'allongement important et alors à ce que la constante diélectrique soit elle-même plus faible que celle désirée dans de telles zones.

La présente invention a pour but de réaliser un ruban semi-conducteur qui évite les inconvénients des différentes solutions connues précitées.

Elle a pour objet un ruban semi-conducteur, pour câbles moyenne et haute tension, comportant un film en plastique, élastiquement déformable, mécaniquement résistant et électriquement isolant et un revêtement pelliculaire adhésif sur l'une des faces dudit film, caractérisé en ce qu'il comporte une pellicule de peinture semi-conductrice souple, adhérente au film et élastiquement déformable avec lui, sur l'autre des faces dudit film.

En outre, en particulier :
- ladite pellicule de peinture semi-conductrice est une peinture comportant un composé polymérique de base rendu semi-conducteur, un solvant volatile choisi dans la famille des solvants chlorés et des cétones et un diluant,
- ledit ruban comporte en outre une feuille détachable de protection recouvrant ledit matériau adhésif.

L'invention a également pour objet un câble moyenne ou haute tension, faisant application dudit ruban, comportant un conducteur central, une isolation, une couche semi-conductrice, un écran métallique et une gaine de protection, présentant une partie terminale dénudée et munie dudit ruban semi-conducteur appliqué en continu et tendu élastiquement sur une partie de la couche semi-conductrice dénudée et une certaine longueur de l'isolation dénudée dudit câble et portant un accessoire de raccordement sur ladite partie terminale dénudée et munie dudit ruban, ledit accessoire comportant un manchon monté sur ledit ruban semi-conducteur et de part et d'autre dudit ruban sur l'isolation et la couche semi-conductrice dénudées dudit câble et les enserrant, caractérisé en ce que ledit ruban semi-conducteur est déformé élastiquement, en suivant étroitement le contour de la transition de la partie d'extrémité de la couche semi-conductrice sur ladite isolation dénudée dudit câble et en étant ainsi maintenu en place par ledit revêtement adhésif adhérant au câble, et en ce qu'une liaison électrique relie ladite pellicule de peinture semi-conductrice, située sur l'extérieur du ruban en place sur le câble, à ladite couche semi-conductrice dudit câble.

En particulier, la liaison électrique de ladite pellicule semi-conductrice du ruban avec ladite couche semi-conductrice dénudée du câble est assurée par l'intermédiaire d'une partie semi-conductrice intérieure dudit manchon ou par l'extrémité du ruban située sur la couche semi-conductrice du câble et repliée intérieurement sur elle-même.

Les caractéristiques et avantages de la présente invention ressortiront d'un exemple de réalisation illustré dans les dessins ci-annexés, dans lesquels :
- la figure 1 est une vue en coupe d'un ruban semi-conducteur selon l'invention,
- la figure 2 représente en coupe partielle la partie terminale d'un câble haute ou moyenne tension, sur laquelle est monté ledit ruban, en vue de recevoir un accessoire de raccordement,

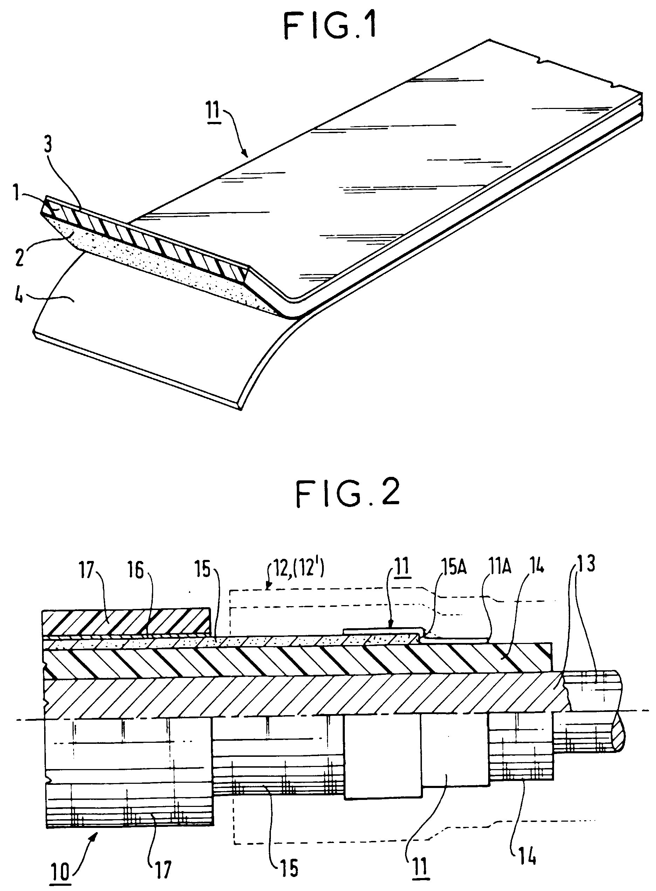

Les figures 3 et 4 sont deux vues partielles et en coupe, faite à échelle agrandie, de la partie terminale du câble, selon la figure 2, sur laquelle est monté l'accessoire de raccordement d'un premier ou d'un deuxième type.
Ainsi que représenté dans la figure 1, le ruban semi-conducteur selon l'invention comporte un film plastique 1, dont l'une des faces est revêtue d'une pellicule adhésive 2 et l'autre face d'une pellicule souple semi-conductrice 3. Il porte également une feuille détachable 4 de protection de la pellicule adhésive 2, tant qu'il n'est pas utilisé.

Le film 1 est électriquement isolant, est élastiquement déformable et présente une grande résistance mécanique. Son allongement à la rupture est de l'ordre ou supérieur à 50 %. Il est de faible épaisseur, de l'ordre de 50 à 200 microns. Il est en particulier réalisé en PVC ou PE ou autre matériau analogue.

Sa pellicule adhésive est d'épaisseur de l'ordre du micron ou de quelques microns.

Sa pellicule semi-conductrice 3 est constituée par une fine couche de peinture semi-conductrice, qui adhère au film et présente une épaisseur de l'ordre de 10 à 30 microns. Cette fine couche de peinture est souple, adhère bien au film et se déforme élastiquement avec le film, sans pour autant s'écailler ou se craqueler ni perdre ou dégrader sa caractéristique semi-conductrice.

Cette peinture semi-conductrice contient essentiellement un composé polymérique de base qui lui confère sa souplesse à l'état sec, un solvant choisi dans la famille des solvants chlorés ou des cétones, du noir de carbone conducteur qui se mélange intimement à la peinture pour la rendre semi-conductrice et un diluant. Elle contient en particulier, avec les proportions pondérales indiquées ou voisines de celles indiquées :
- un polyéthylène chlorosulfoné, tel que celui connu sous le nom commercial "Hypalon" : 15,5 %
- un solvant méthyl-éthyl-cétone : 47 %
- de l'essence type C : 30 %
- du noir de carbone : 7,5 %

Une longueur convenable de ce ruban semi-conducteur muni de sa feuille de protection est associée à tout accessoire de raccordement à mettre en place sur un câble moyenne ou haute tension.

En se référant aux figures 2 à 4, le câble électrique moyenne ou haute tension 10 est équipé du ruban semi-conducteur décrit ci-avant et désigné sous la référence globale 11 et d'un accessoire de raccordement, ce dernier comportant de manière connue une pièce non représentée de raccordement électrique du câble à un autre câble ou à un appareil et un manchon 12 ou 12' associé à cette pièce et partiellement représenté.

Ce câble comporte un conducteur central 13, une isolation interne 14, une couche semi-conductrice 15, un écran métallique 16 et une gaine extérieure de protection 17. Sa partie terminale est dénudée et dite préparée initialement, pour la mise à nu sur des longueurs différentes du conducteur, de l'isolation et de la couche semi-conductrice.

On a désigné par la référence 15A, la marche d'escalier ou transition définie par l'extrémité de la couche semi-conductrice dénudée au-dessus de l'isolation dénudée.

Le ruban 11 est appliqué sur la marche terminale 15A de la couche semiconductrice 15 et de part et d'autre sur une certaine longueur de la couche semi-conductrice 15 et de l'isolation 14 dénudées. Il a sa face adhésive, débarassée de sa feuille de protection, qui est reçue sur le câble. Il est très fortement tendu et déformé élastiquement au fur et mesure de sa mise en place, pour suivre exactement tout le contour de la marche 15A et lui adhérer, ainsi que sur toutes les parties recouvertes. Le ruban est ainsi mis en place en l'enroulant autour de la marche. Un tour complet d'enroulement du ruban à cheval sur le bout de la marche et éventuellement un tour partiel supplémentaire de part et d'autre suffisent. Sa pellicule semi-conductrice 3 est extérieure et définit une nouvelle couche semiconductrice sur la longueur de la couche semi-conductrice recouverte, sur le contour de sa marche 15A et sur la longueur de l'isolation recouverte. Une nouvelle transition 11A est ainsi définie sur l'isolation, cette nouvelle transition étant quasi-inexistante puisqu'elle est d'épaisseur inférieure à 250 microns.

Le manchon 12 ou 12' entoure avec serrage la partie terminale dénudée du câble, ou de chaque câble dans une jonction de deux câbles. Il comporte une partie semi-conductrice intérieure 18, ou extérieure 18', ou en variante intérieure et extérieure, et une partie principale isolante 19 ou 19' reçue sur l'isolation dénudée du câble et éventuellement sur sa couche semi-conductrice. En variante, il peut être entièrement en matériau isolant ou en matériau isolant à haute permittivité ou à résistance électrique non linéaire.

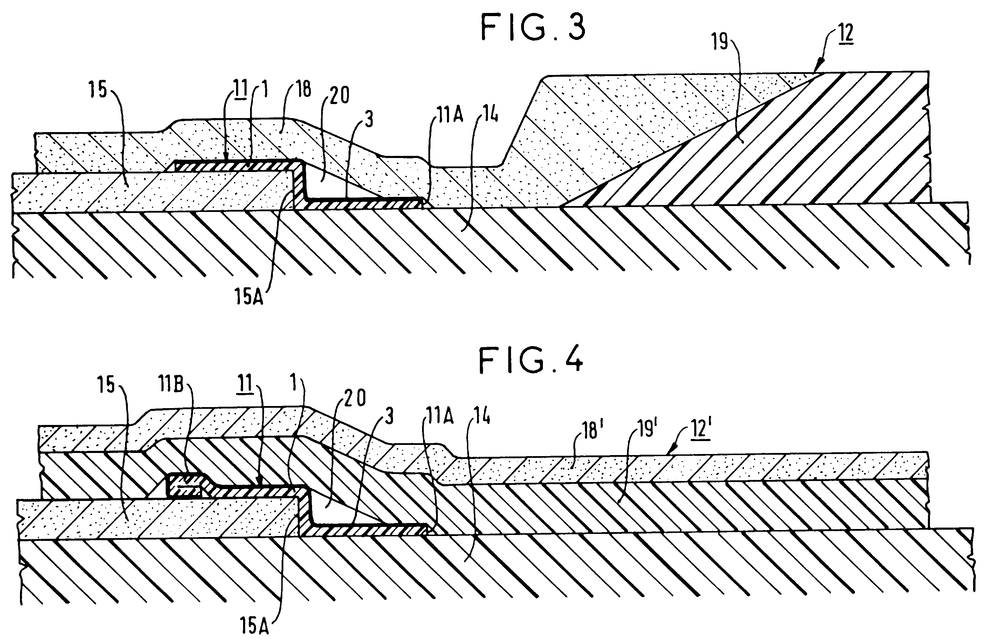

Dans la figure 3, la partie semiconductrice intérieure 18 du manchon 12 en place sur le câble, qui a été muni préalablement du ruban semiconducteur 11, est terminale et prévue suffisamment longue pour recouvrir le ruban sur toute sa longueur et pour s'étendre légèrement au-delà, de part et d'autre du ruban, sur la couche semiconductrice et l'isolation du câble. Dans la figure 4, la partie semi-conductrice 18' est extérieure et continue sur toute la longueur du manchon 12'.

Le manchon 12 ou 12' ne laisse sensiblement aucun intervalle libre sous lui au niveau du bout 11A du ruban sur l'isolation. Il laisse par contre un intervalle 20 plus ou moins important entre lui et le câble, au niveau de la marche 15A recouverte par le ruban, mais cet intervalle 20 est blindé électriquement et ne peut entraîner de décharges à ce niveau dans le manchon.

La figure 2 montre que la pellicule semiconductrice extérieure 3 du ruban 11 en place est reliée électriquement à la masse par la partie semi-conductrice 18 du manchon 12, qui est en contact à pression d'une part sur cette pellicule semi-conductrice 3 et d'autre part sur la couche semi-conductrice 15 à la masse du câble.

La figure 3 montre que l'extrémité arrière 11B du ruban 11 en place sur le câble est repliée intérieurement en boucle sur elle-même. Sa pellicule semi-conductrice 3, normalement extérieure le long du câble, vient ainsi par son extrémité repliée 11B directement en contact avec la couche semi-conductrice 15 à la masse du câble, en étant maintenue en pression contre elle par le manchon 12.

Ce ruban semi-conducteur mince, déformable élastiquement et très résistant mécaniquement est de mise en place aisée et rapide et évite les problèmes de décharges dans les accessoires. Il peut éviter la réalisation d'une transition douce de la couche semi-conductrice sur l'isolation, même lorsqu'une telle transition est réalisable. Son coût, en incluant sa fabrication et le temps nécessaire pour sa mise en place, reste très faible.

## Revendications

1. Ruban semi-conducteur, pour câbles moyenne et haute tension, comportant un film en plastique (1), élastiquement déformable, mécaniquement résistant et électriquement isolant et un revêtement pelliculaire adhésif (2) sur l'une des faces dudit film, caractérisé en ce qu'il comporte une pellicule de peinture semi-conductrice (3) souple, adhérente au film et élastiquement déformable avec lui, sur l'autre des faces dudit film (1).

2. Ruban selon la revendication 1, caractérisé en ce que ladite pellicule de peinture semi-conductrice (3) est une peinture comportant un polyéthylène chlorosulfoné, un solvant, du noir de carbone conducteur et un diluant.

3. Ruban selon l'une des revendications 1 et 2, caractérisé en ce qu'il comporte en outre une feuille détachable de protection (4) recouvrant ledit revêtement adhésif (2).

4. Câble moyenne ou haute tension, faisant application du ruban selon l'une des revendications 1 et 2, ledit câble comportant un conducteur central, une isolation, une couche semi-conductrice, un écran métallique et une gaine de protection, présentant une partie terminale dénudée et munie dudit ruban semi-conducteur appliqué en continu et tendu élastiquement sur une partie de la couche semi-conductrice dénudée et une certaine longueur de l'isolation dénudée dudit câble et portant un accessoire de raccordement sur ladite partie terminale dénudée et munie dudit ruban, ledit accessoire comportant un manchon monté sur ledit ruban semi-conducteur et de part et d'autre dudit ruban sur l'isolation et la couche semi-conductrice dénudées dudit câble et les enserrant, caractérisé en ce que ledit ruban semi-conducteur est déformé élastiquement, en suivant étroitement le contour de la transition de la partie d'extrémité de la couche semi-conductrice sur ladite isolation dénudée dudit câble et en étant ainsi maintenu en place par ledit revêtement adhésif (2) adhérant au câble, et en ce qu'une liaison électrique (18, 11B) relie ladite pellicule de peinture semi-conductrice (3), située sur l'extérieur du ruban en place sur le câble, à ladite couche semi-conductrice (15) dudit câble.

5. Câble selon la revendication 4, caractérisé en ce que ladite liaison électrique est constituée par une partie intérieure semi-conductrice (18) dudit manchon (12), positionnée sur ledit ruban en place et de part et d'autre sur la couche semi-conductrice et l'isolation dénudées dudit câble.

6. Câble selon la revendication 4, caractérisé en ce que ladite liaison électrique est constituée par l'extrémité (11B) dudit ruban (11) en place, située sur ladite couche semi-conductrice dénudée dudit câble et repliée intérieurement sur elle-même.
